# EUROPEAN PATENT SPECIFICATION

(11) **EP 3 418 128 B1**
(45) Date of publication and mention of the grant of the patent: **04.03.2020**
(21) Application number: 17845739.6
(22) Date of filing: 14.03.2017
(51) Int. Cl.: B60R 21/231, B60R 21/203, B60R 21/205, B60R 21/207

(54) **AIRBAG DEVICE**
AIRBAGVORRICHTUNG
DISPOSITIF DE COUSSIN PNEUMATIQUE

(30) Priority: 02.09.2016 JP 2016171716
(43) Date of publication of application: 26.12.2018
(73) Proprietor: Mazda Motor Corporation, Aki-gun, Hiroshima 730-8670 (JP)
(72) Inventor: TAKESHITA Hiroaki, Aki-gun Hiroshima 730-8670 (JP); NAGATANI Takashi, Aki-gun Hiroshima 730-8670 (JP); MIYAJIMA Yoichi, Aki-gun Hiroshima 730-8670 (JP)
(74) Representative: Laufhütte, Dieter
(86) International application number: PCT/JP2017/010228
(87) International publication number: WO 2018/042728

(56) References cited:
- JP-A- H05 213 132
- JP-A- H05 213 132
- JP-A- 2003 170 795
- JP-A- 2009 292 292
- JP-A- 2015 077 889
- JP-A- 2015 113 027
- JP-A- 2015 116 912
- JP-A- 2016 020 115
- JP-A- 2016 020 115
- JP-A- 2016 020 116
- JP-A- 2016 043 713
- JP-A- 2016 049 882
- JP-A- 2016 049 882
- JP-A- 2016 055 824
- JP-A- 2017 024 679
- US-A1- 2016 009 242
- US-A1- 2016 046 252

## Description

### TECHNICAL FIELD

The present invention relates to an airbag device for protecting an occupant at the time of a collision, especially an oblique collision, of a vehicle.

### BACKGROUND ART

Vehicles of the known art are provided with an airbag device configured to protect an occupant against impact at the time of a collision of the vehicle.

In recent years, considerable attention has been paid to the importance of protection of an occupant of a vehicle in the case of a collision of a vehicle with an obstacle coming obliquely from the front, and airbag devices having a function of protecting an occupant at the time of a collision of this type are under development.

For example, Patent Document 1 discloses an airbag device of this type according to the preamble of claim 1. When a vehicle collides with an obstacle coming obliquely from the front and the head of an occupant in the vehicle comes into contact with the airbag, the airbag device reduces a frictional force generated due to the contact between the occupant's head and the airbag so as to reduce rotation moment applied to the occupant's head.

Specifically, the airbag device includes a center airbag portion having a plane substantially orthogonal to the contact surface, and the occupant's head is received by the contact surface and the plane substantially perpendicular to the contact surface. Rotation moment resulting from the frictional force generated between the substantially orthogonal surface and the occupant's head acts so as to cancel rotation moment generated between the contact surface and the occupant's head, thereby substantially keeping the occupant's head from being turned. Furthermore, a sliding cloth is provided on the contact surface to reduce rotation moment resulting from the frictional force on this surface, thereby reliably reducing the risk of turning the occupant's head.

### CITATION LIST

### PATENT DOCUMENTS

Patent Document 1: Japanese Unexamined Patent Publication No. 2016-49882

### SUMMARY OF THE INVENTION

### TECHNICAL PROBLEM

However, as a result of intensive studies, the present inventors have made the findings that at the time of an actual oblique collision, once coming into contact with the deployed airbag, the head of an occupant moves on the airbag surface toward the center in the vehicle width direction, while receiving a reaction force from the airbag and being substantially in contact with the airbag surface.

Patent Document 1 discloses a configuration in which a sliding cloth is sewn to an airbag in the vehicle width direction. However, in this case, since the movement of the sliding cloth in the vehicle width direction is restricted, there is a risk that the occupant's head rolls over a region where the sliding cloth is absent before a later stage, of the oblique collision, in which the occupant's head reaches a vicinity of the center in the vehicle width direction and comes out of contact with the airbag.

Further, Patent Document 1 discloses a configuration for facilitate the movement of the sliding cloth by rupturing a tear seam at an end of the sliding cloth after the sliding cloth has been maintained in contact with the occupant's head, in the later stage of the oblique collision. However, in this case, fine tuning of a rupturing force is needed to properly rupture the tear seam.

In addition, the airbag disclosed in Patent Document 1 has a complicated shape and causes a problem in terms of manufacturing costs.

The present invention has been made in view of the foregoing background. It is therefore an object of the present invention to provide an airbag device which is capable of reducing rotation moment on the head of an occupant in a vehicle when the vehicle collides with an obstacle coming obliquely from the front and the occupant's head moves in the vehicle width direction while being in contact with a surface of an airbag.

### SOLUTION TO THE PROBLEM

In order to achieve the above object, an airbag of the present invention includes a center deployable portion which is configured to be deployed obliquely rearward toward a center. The orientation of a head receiving surface of the center deployable portion is adjusted, and a frictional force reducer is provided on the head receiving surface.

An airbag device of the present invention includes a bag member configured to be deployed from a location in front of an occupant toward the occupant when receiving gas suppled to the bag member. The bag member includes a center deployable portion configured to be deployed obliquely rearward toward a center in a vehicle width direction of a vehicle when receiving the gas supplied. The center deployable portion has a head receiving surface which receives the head of the occupant at time of an oblique collision of the vehicle with an obstacle. The head receiving surface has thereon a frictional force reducer which reduces a friction force between the bag member and the head. The frictional force reducer has both ends, in the vehicle width direction, coupled to the head receiving surface, while having a slack portion which is slack with respect to the vehicle width direction.

At the time of an oblique collision of a vehicle with an obstacle, this feature can reduce rotation moment applied to the occupant's head in an initial stage of the oblique collision. Further, in a later stage of the oblique collision, this feature allows the frictional force reducer to mainly move on the head receiving surface when the occupant's head moves along the head receiving surface, thereby practically reducing a frictional force applied to the occupant's head. As a result, rotation moment on the occupant's head is reduced, so that the occupant's head is substantially kept from being turned, and the occupant's body can be protected.

If a contact region where the occupant's head is in contact with the head receiving surface is approximated with a planar plane, an angle between the planar plane and an approach direction in which the occupant's head moves is preferably 90° or smaller as viewed from above the vehicle.

With this feature, the frictional force reducer can be made slack toward the outside of the vehicle when the occupant's head comes into contact with the bag member. This facilitates the movement of the frictional force reducer on the head receiving surface in a later stage of a collision.

As a result, the occupant's head is substantially kept from being turned, and the occupant's body can be protected.

The angle is preferably 78° or larger and 90° or smaller as viewed from above the vehicle.

This feature can reliably reduce an angular velocity of rotation applied to the occupant's head.

In a preferred embodiment, a vehicle is provided in which the bag member is arranged in a predetermined portion of at least one of a driver's seat, a passenger seat, or a rear seat of the vehicle, and the center deployable portion is positioned adjacent to the center in the vehicle width direction.

With this configuration in which the center deployable portion is positioned so as to reliably receive the head of an occupant in a vehicle at the time of an oblique collision, rotation moment on the occupant's head can be reduced and the occupant's body can be protected.

### ADVANTAGES OF THE INVENTION

As can be seen from the forgoing description, at the time of a collision of a vehicle with an obstacle coming obliquely from the front, the present invention makes it possible to reduce rotation moment on the head of an occupant to a low level, and to reduce a load on the occupant's head and neck.

### BRIEF DESCRIPTION OF THE DRAWINGS

[FIG. 1A] FIG. 1A is a plan view of an airbag in a deployed state, according to a first embodiment of the present invention, as viewed from above.
[FIG. 1B] FIG. 1B is a perspective view of the airbag in the deployed state.
[FIG. 1C] FIG. 1C is a schematic cross-sectional view taken along line IC-IC of FIG. 1A.
[FIG. 2A] FIG. 2A is a structural view schematically showing panels of the airbag that are coupled together, as viewed obliquely from above.
[FIG. 2B] FIG. 2B is a structural view schematically showing the panels of the airbag that are coupled together, as viewed from rear.
[FIG. 2C] FIG. 2C is a structural view schematically showing the panels of the airbag that are coupled together, as viewed obliquely from below.
[FIG. 3] FIG. 3 is a plan view of a vicinity of a passenger seat in a vehicle with an airbag deployed, as viewed from above.
[FIG. 4] FIG. 4 is a plan view showing a relationship between a positon of the head of an occupant directly before an oblique collision and a position of an airbag, as viewed from above.
[FIG. 5] FIG. 5 is a plan view for illustrating rotation moment applied to the occupant's head in an initial stage of an oblique collision.
[FIG. 6] FIG. 6 is a plan view for illustrating rotation moment applied to the occupant's head in a later stage of an oblique collision in a case where no patch cloth is provided.
[FIG. 7] FIG. 7 is a plan view for illustrating rotation moment applied to the occupant's head in a later stage of an oblique collision in a case where a patch cloth is provided.
[FIG. 8A] FIG. 8A is a schematic view showing movements of a patch cloth and an occupant's head immediately after the occupant's head comes into contact with the patch cloth.
[FIG. 8B] FIG. 8B is a schematic view showing movements of the patch cloth and the occupant's head when the patch cloth is moving on a head receiving surface.
[FIG. 8C] FIG. 8C is a schematic view showing movements of the patch cloth and the occupant's head directly before the head comes out of contact with the surface of the airbag.
[FIG. 9A] FIG. 9A is a schematic view showing a relationship between the strength of ends of a patch cloth and the movement of an occupant's head when the center-facing end is ruptured.
[FIG. 9B] FIG. 9B is a schematic view showing a relationship between the strength of ends of the patch cloth and the movement of the occupant's head when the outside-facing end is ruptured.
[FIG. 10] FIG. 10 is a plan view of airbags in a deployed state in a vehicle, according to a second embodiment of the present invention, as viewed from above.

### DESCRIPTION OF EMBODIMENT

Embodiments of the present invention will be described in detail below with reference to the drawings. Note that the following description of the preferred embodiments is a merely example in nature, and is not intended to limit the scope, application, or uses of the present invention.

In the description below, unless otherwise specified, "front, forward," "rear, rearward," "longitudinal, longitudinally," "above, upper, upward," "below, lower, downward" and "vertical, vertically" represent the respective directions with respect to a vehicle, and each include directions inclined to some extent relative to the respective direction.

Further, "the vehicle width direction" refers to the width direction of a vehicle, "the center" refers to a central portion of the vehicle in the vehicle width direction. Further, "the outside" refers to the outside of the vehicle in the vehicle with direction, the outside being opposite to the center.

Further, "substantially orthogonal" includes not only a case where components or directions are precisely orthogonal to each other, but also a case of having a deviation of several degrees.

The term "oblique collision" means a collision with an obstacle coming obliquely from the front, considered by, for example, National Highway Traffic Safety Administration (NHSTA) (for example, a collision at a relative angle of 15° with respect to the collision counterpart, and with an overlap amount of about 35% in the vehicle width direction), and a small overlap collision. The small overlap collision means some types of frontal collisions of motor vehicles, with a predetermined overlap amount defined by, for example, Insurance Institute for Highway Safety (IIHS). Specifically, the small overlap collision refers to a collision in which the overlap amount in the vehicle width direction with the collision counterpart is 25% or less.

### (First Embodiment)

### (Structure and Operation of Components of Airbag Device)

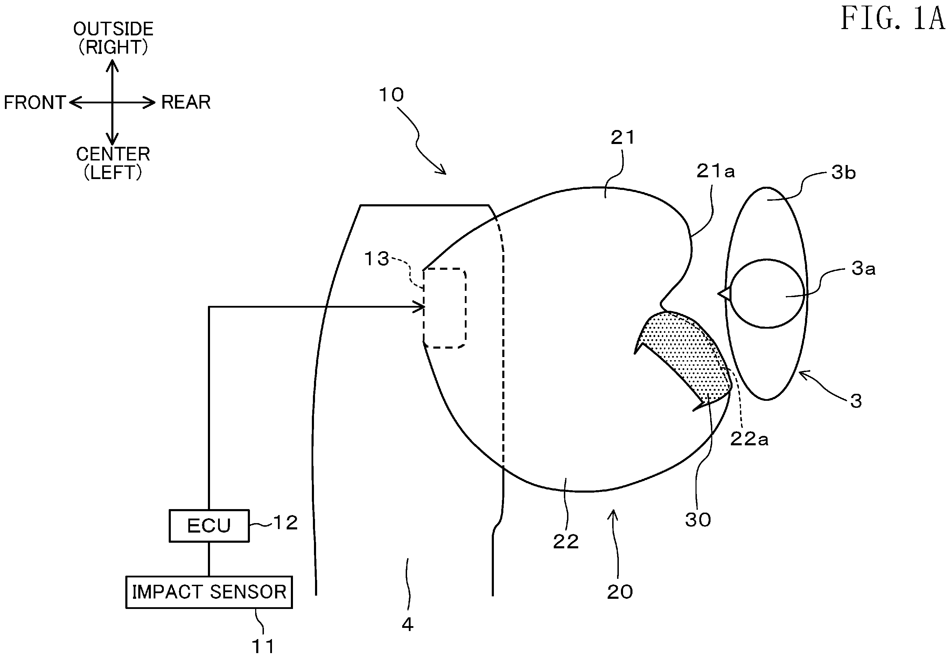

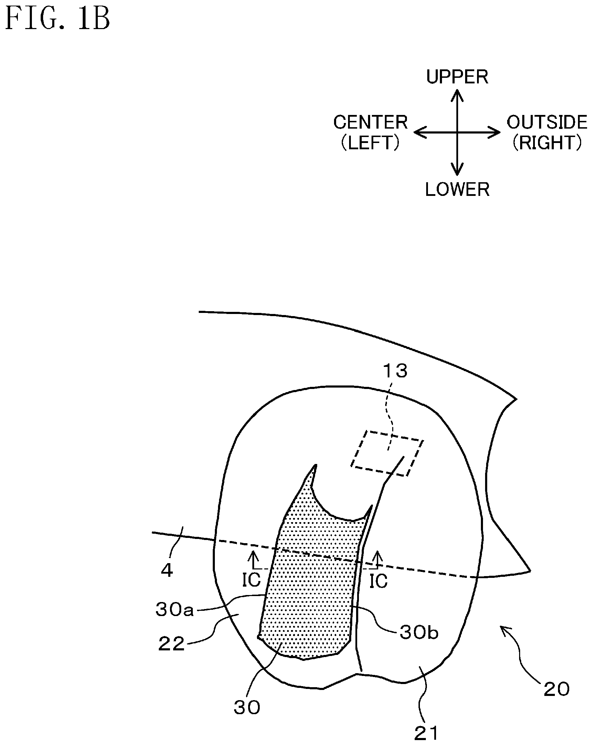

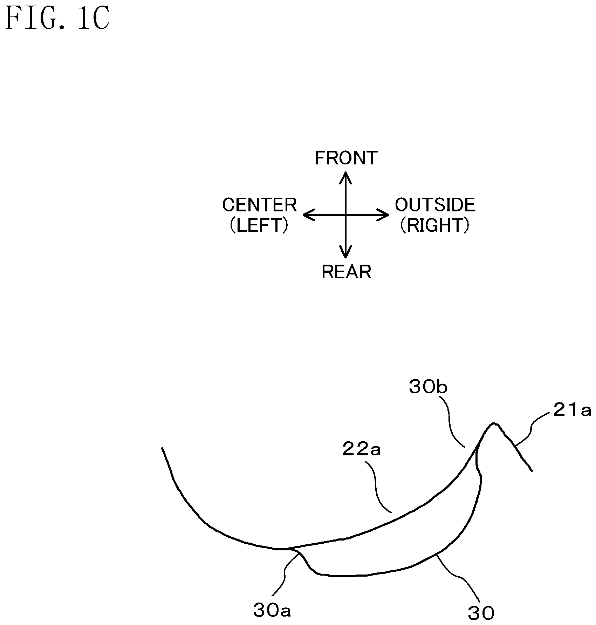

FIGS. 1A to 1C illustrate a structure of an airbag according to this embodiment, which is in a deployed state. FIG. 1A is a plan view as viewed from above, FIG. 1B is a perspective view, and FIG. 1C is a schematic cross-sectional view taken along line IC-IC of FIG. 1B.

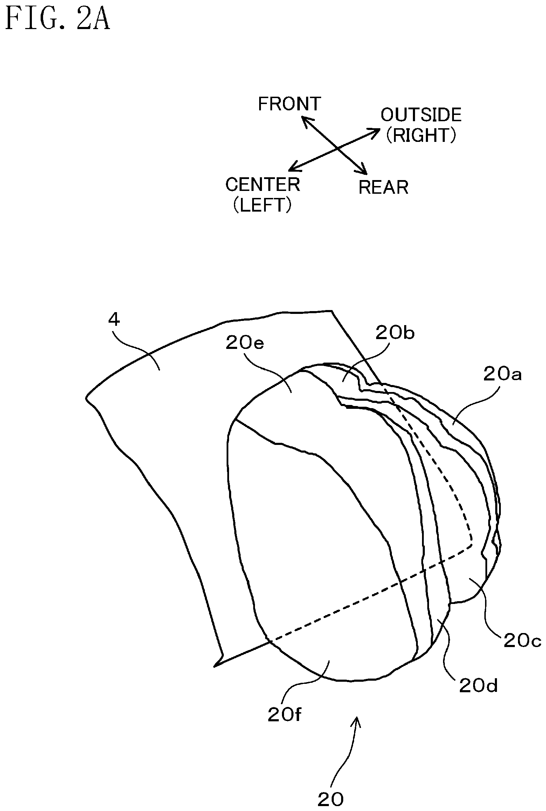

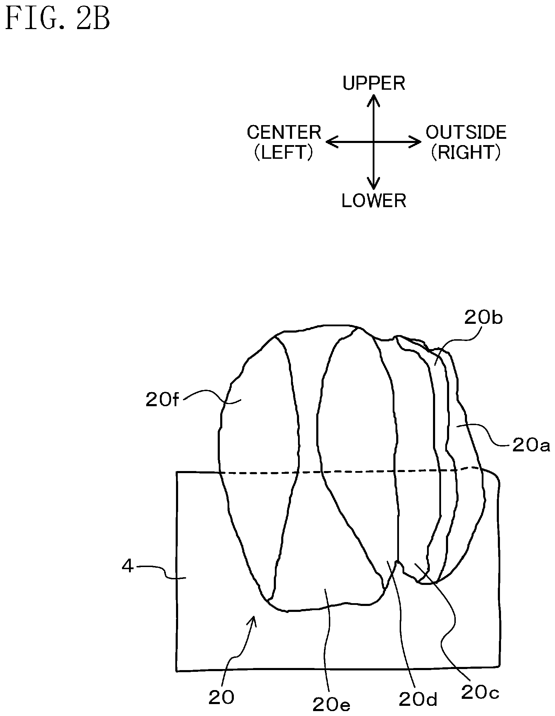

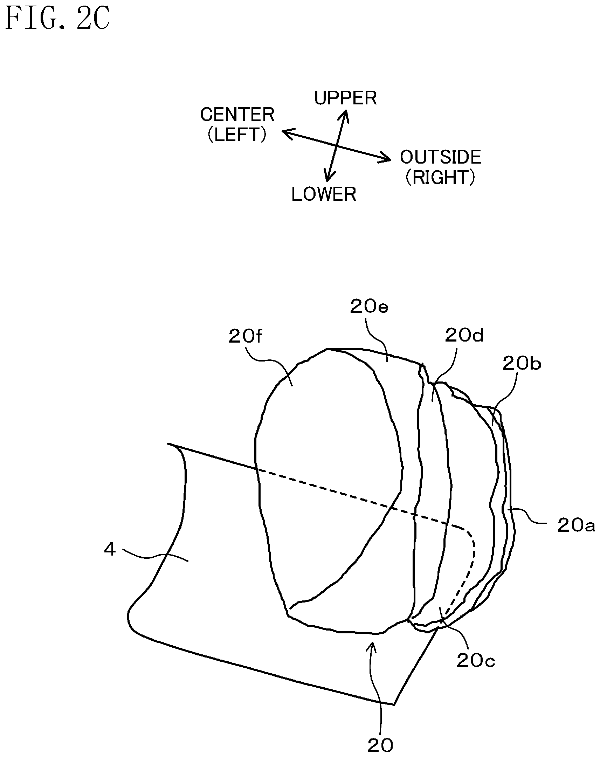

FIG. 2A to 2C are structural views illustrating how panels of the airbag are coupled together. FIG. 2A is a view of the coupled panels as viewed obliquely above, FIG. 2B is a view of the coupled panels as viewed from rear, and FIG. 2C is a view of the coupled panels as viewed obliquely from below.

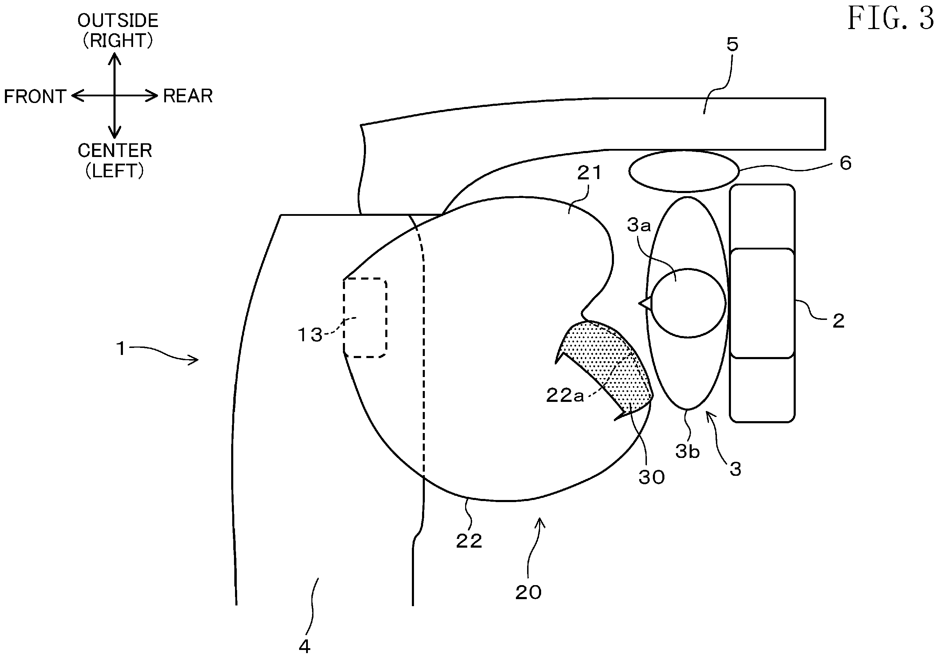

FIG. 3 is a plan view of a vicinity of a passenger seat in a vehicle with the airbag deployed, as viewed from above.

Note that in order to clearly show how the panels of the airbag 20 are coupled together, a patch cloth 30 is omitted from FIGS. 2A, 2B, and 2C.

As shown in FIGS. 1A and 3, an airbag device 10 is disposed in an instrument panel 4 facing the passenger seat 2 in a vehicle 1, and includes the airbag 20.

The airbag 20 is a bag member including an outer deployable portion 21 and a center deployable portion 22 each of which is a bag member. When the airbag 20 enters an expanded-deployed state, the outer deployable portion 21 is deployed obliquely rearward toward the outside, and the center deployable portion 22 is deployed obliquely rearward toward the center.

The center deployable portion 22 has a head receiving surface 22a and a patch cloth 30 coupled to the head receiving surface 22a. The head receiving surface 22a is a curved surface which is oriented obliquely rearward toward the outside, and which is bulged toward an occupant 3 seated in the passenger seat 2.

When the airbag 20 is deployed, the outer deployable portion 21 is supported on a door 5 shown in FIG. 3, whereas there is no such support near the center as viewed from the passenger seat 2.

Therefore, in order to keep the airbag 20 freestanding, the center deployable portion 22 is configured to increase in size more than the outer deployable portion 21.

As shown in FIGS. 1B and 1C, the patch cloth 30, which is a cloth member, has a center-facing end 30a and an outside-facing end 30b which are coupled to the head receiving surface 22a. The patch cloth 30 has a length, in the vehicle width direction, longer than a distance from the position of the center-facing end 30a to the position of the outside-facing end 30b, the distance being along the head receiving surface 22a and in the vehicle width direction.

Specifically, the patch cloth 30 is coupled to the head receiving surface 22a while having a slack portion which is slack with respect to the vehicle width direction. As shown in FIG. 1C, the airbag 20 is expanded and deployed, while having the patch cloth 30 expanded more than the head receiving surface 22a by an amount corresponding to the slack portion.

The coupling of the patch cloth 30 may be achieved by sewing with a thread, bonding with an adhesive, heat-welding, or any other means. It is suitable that the coupling is strong to the extent that the coupling is not ruptured when the head 3a of the occupant 3 comes into contact with the airbag 20 and then moves along the head receiving surface 22a, as will be described later.

As shown in FIGS. 2A, 2B, and 2C, the airbag 20 is formed by coupling a plurality of panels (fabric base parts) 20a to 20f together. The outer deployable portion 21 is comprised of three panels 20a, 20b, and 20c coupled together. The center deployable portion 22 is comprised of three panels 20d, 20e, and 20f coupled together.

In each of the deployable portions, ends of adjacent ones of the panels are sewn or joined to each other in the vertical direction as viewed from rear. In FIGS. 2A, 2B, and 2C, these ends are indicated by solid lines.

Although not shown, the outer deployable portion 21 is separated from the center deployable portion 22 inside the airbag 20.

As shown in FIGS. 2A and 2B, the panel 20e has a width decreasing downward from the top surface of the center deployable portion 22 such that the width is narrowed most in a vicinity of the vertical center. As shown in FIGS. 2B and 2C, the width of the panel 20e then increases downward from the vicinity of the vertical center.

The "width" of the panel 20e refers to the "width" in the vehicle width direction.

Forming the panel 20e in this shape facilitates expansion of the portions corresponding to the panels 20d and 20f when the center deployable portion 22 is to be expanded and deployed. In addition, for example, adjusting the variation in the width of the panel 20e in the vertical direction enables the head receiving surface 22a to be oriented obliquely rearward at a desired angle. Furthermore, the orientation of the center deployable portion 22 can be varied by adjusting the shape of the panel 20e. This contributes to simplification of the structure of the airbag 20.

The airbag 20 is made of a woven fabric comprised of artificial fibers such as nylon-based fibers and polyester-based fibers. The patch cloth 30 is made of a material similar to the material for the airbag 20, or a material having a lower coefficient of friction than the material for the airbag 20, such as fluorine-based fibers. Alternatively, the back surface the patch cloth 30 (i.e., the surface in contact with the head receiving surface 22a) may be coated with a low friction material such as a fluorine-based material.

It will be described next how the airbag device 10 operates.

When the vehicle 1 collides with an obstacle, an impact sensor 11 that is configured to detect acceleration or the like emits a signal, and an electronic control unit (ECU) 12 actuates an inflator 13 in response to the signal.

When actuated, the inflator 13, which is a gas supplier, generates gas and supplies the gas to expand the airbag 20. Consequently, a door (not shown) provided at the instrument panel 4 cleaves, and the airbag 20 is deployed toward the occupant 3.

At the time of a collision of the vehicle 1 with an obstacle, the deployed airbag 20 mainly receives the head 3a of the occupant 3 and protects the occupant 3.

In the case of a frontal collision, the head 3a comes into contact with a vicinity of the boundary between the outer deployable portion 21 and the center deployable portion 22.

At this moment, the occupant's head 3a receives a reaction force from a head receiving surface 21a and a reaction force from the head receiving surface 22a. Since the directions in which these reaction forces are applied are substantially symmetric with respect to the longitudinal direction, the reaction forces act to cancel each other with respect to turning of the occupant's head 3a. Thus, at the time of a frontal collision, the occupant's head 3a comes into contact with, and is protected by, the airbag 20, while substantially being kept from being turned.

As shown in FIG. 3, at the time of a collision, a side airbag 6 that is provided inside the door 5 of the vehicle 1 is also deployed toward the occupant 3, as viewed from above. Further, a curtain airbag (not shown) provided inside the ceiling (not shown) of the vehicle 1 is deployed from the ceiling toward the occupant 3 and deployed downward from a portion, of the ceiling, adjacent to the door 5.

In the case where an obstacle collides with the vehicle 1 from side, or the case where the occupant 3 moves obliquely forward toward the outside due to an oblique collision, the side airbag 6 and the curtain airbag protect the occupant 3.

### (Principle of Control of Turning of Occupant's Head in Case of Oblique Collision)

A principle by which the airbag of this embodiment substantially keeps the head of an occupant from being turned at the time of an oblique collision will be described next.

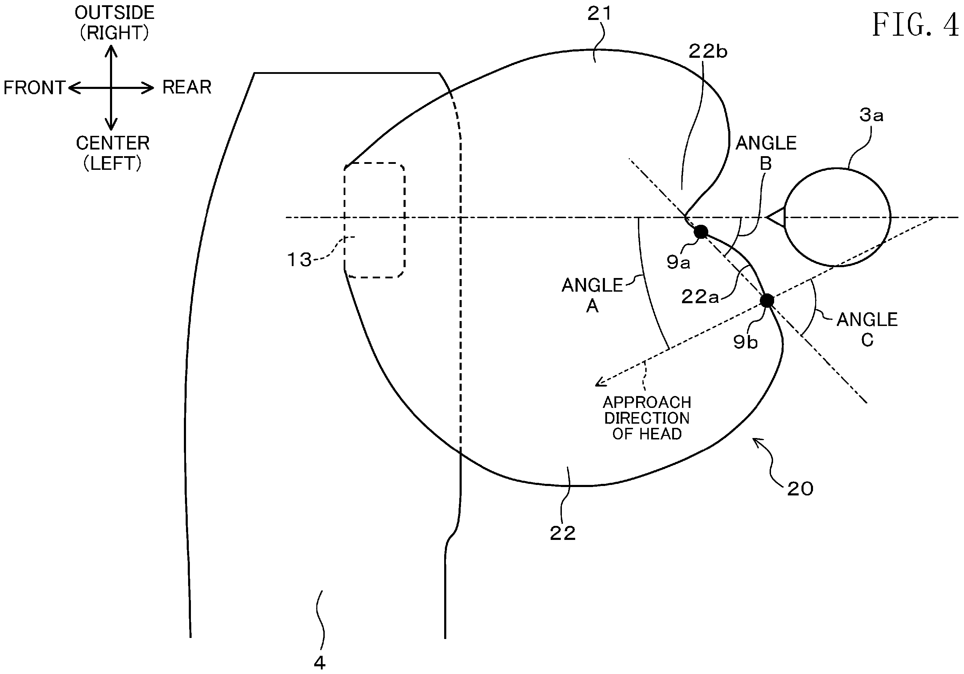

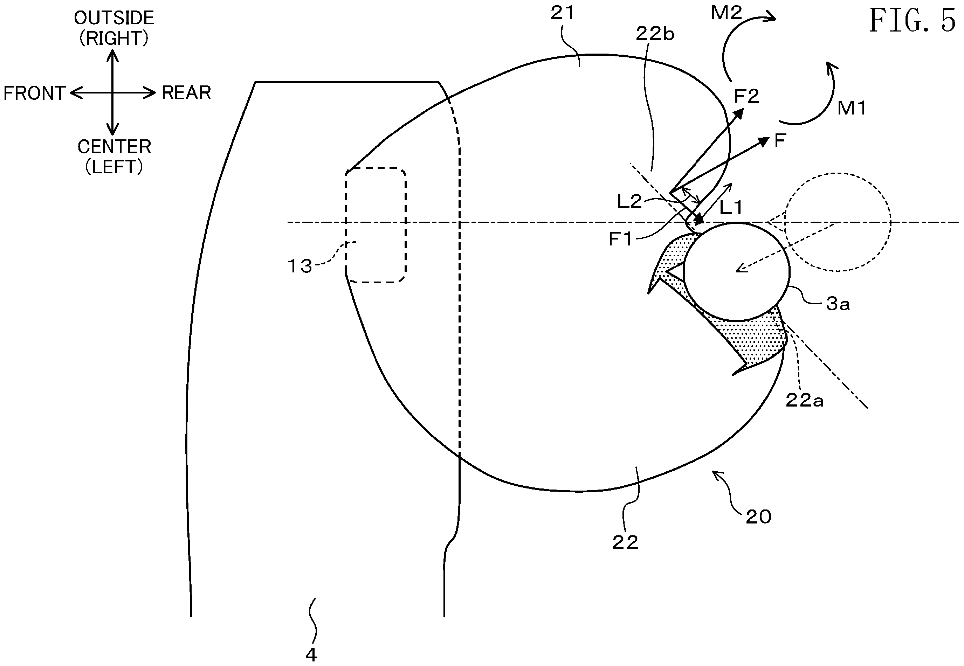

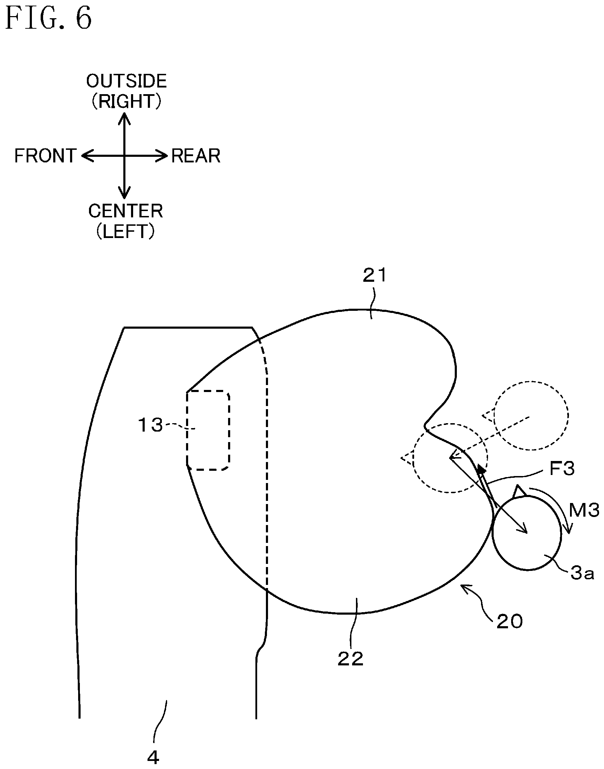

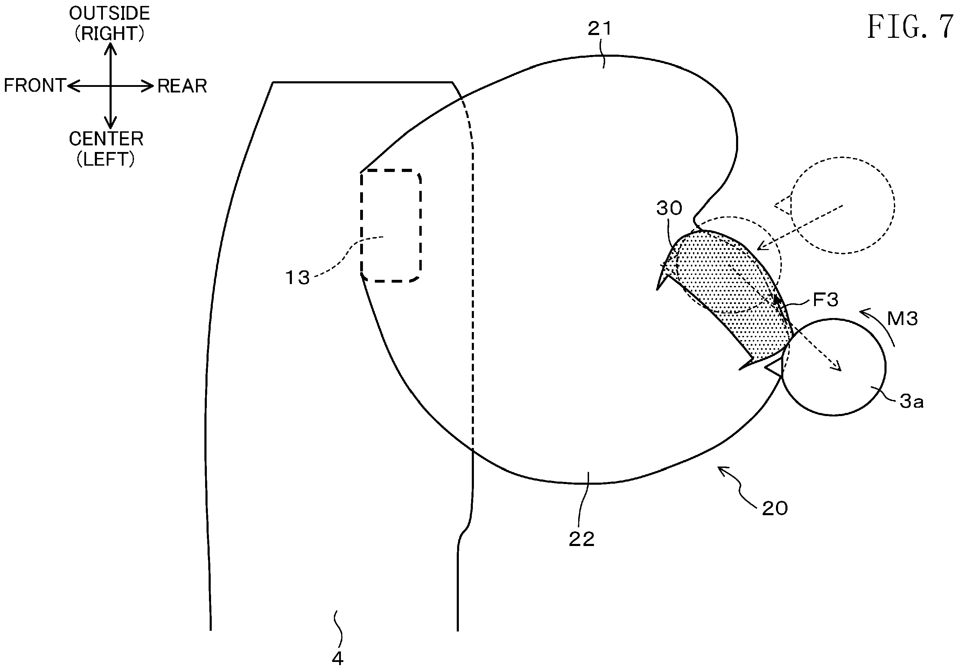

FIG. 4 is a plan view showing a relationship between a position of the head of an occupant directly before an oblique collision and a positon of the airbag, as viewed from above. FIG. 5 is a plan view for illustrating rotation moment applied to the occupant's head in an initial stage of an oblique collision. FIG. 6 is a plan view for illustrating rotation moment applied to the occupant's head in a later stage of an oblique collision in a case where no patch cloth is provided. FIG. 7 is a plan view for illustrating rotation moment applied to the occupant's head in a later stage of an oblique collision in a case where a patch cloth is provided.

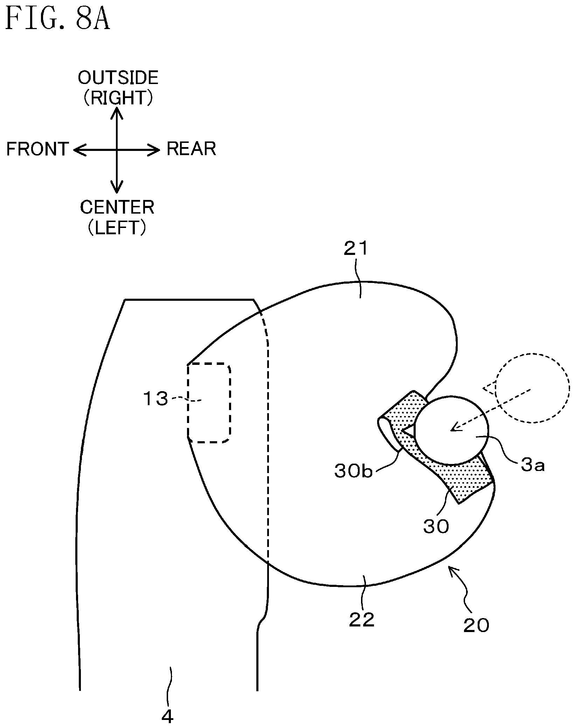

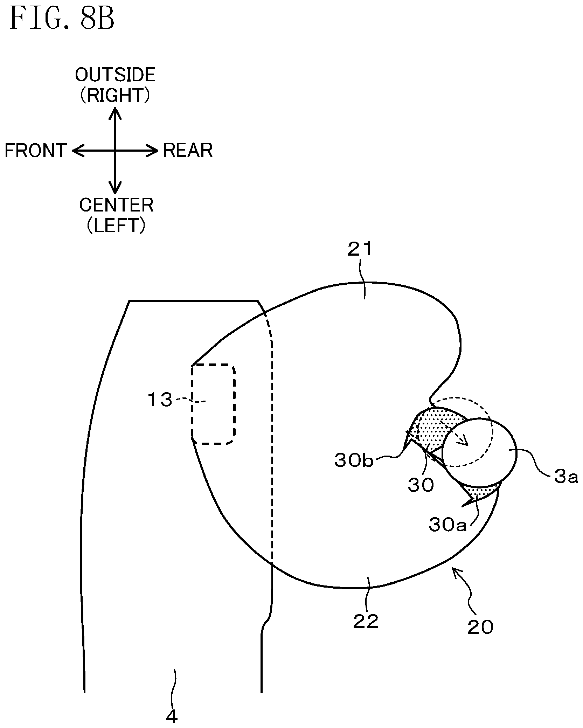

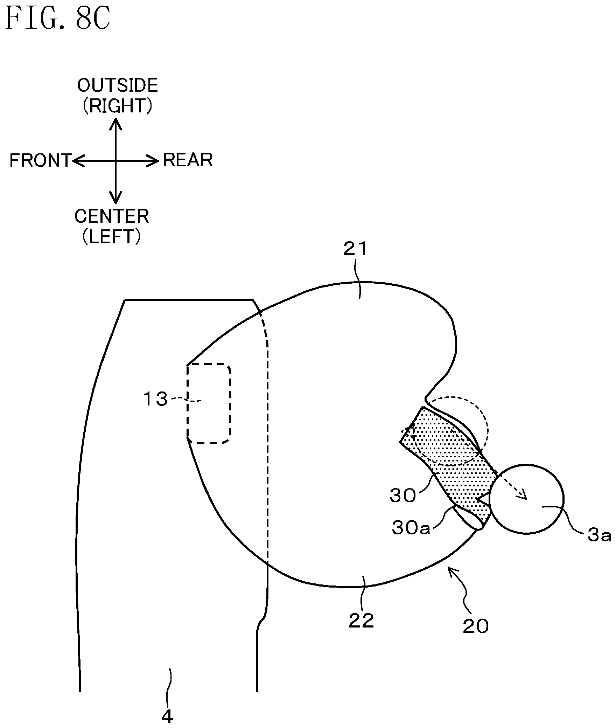

FIGS. 8A to 8C schematically show movements of the patch cloth and the occupant's head. FIG. 8A is a schematic view showing the movements immediately after the occupant's head comes into contact with the patch cloth. FIG. 8B is a schematic view showing the movements when the patch cloth is moving on the head receiving surface. FIG. 8C is a schematic view showing the movements directly before the occupant's head comes out of contact with the surface of the airbag.

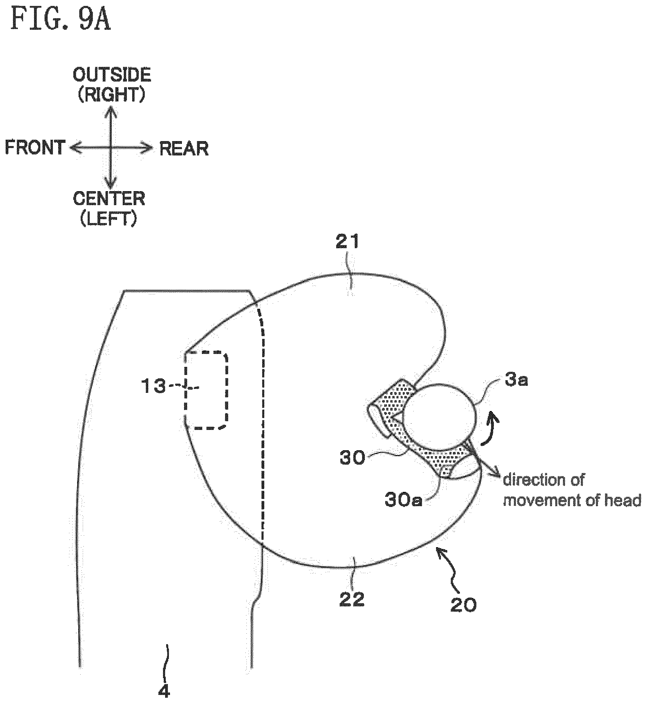

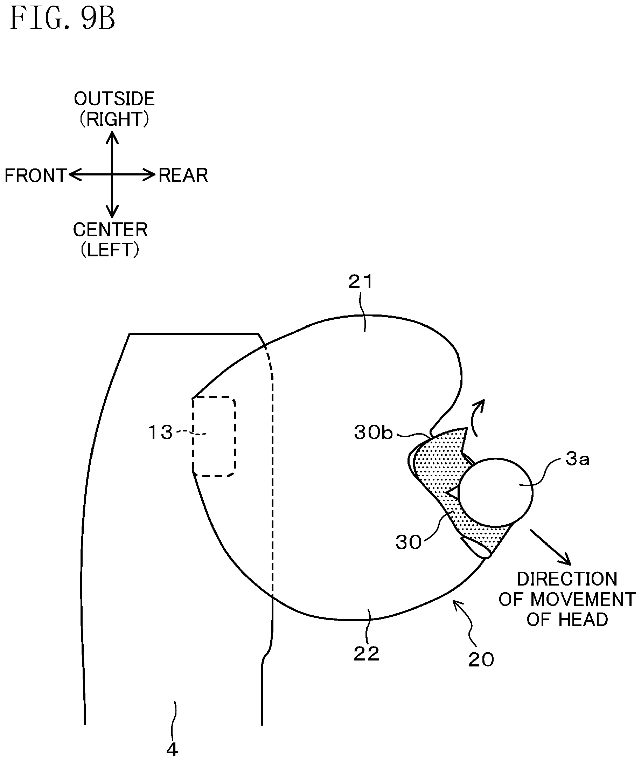

FIGS. 9A and 9B schematically show a relationship between the strength of ends of the patch cloth and the movement of the occupant's head. FIG. 9A is a schematic view showing a case where the center-facing end is ruptured. FIG. 9B is a schematic view showing a case where the outside-facing end is ruptured.

Note that in order to illustrate the structure of the center deployable portion 22, especially the inclination or the like of the head receiving surface 22a, the patch cloth 30 is not shown in FIG. 4.

As shown in FIG. 4, due to an oblique collision, the head 3a of the occupant 3 moves obliquely forward at an angle A, in the direction toward the center. The airbag 20 has already been deployed with the head receiving surface 22a formed. At this moment, a virtual receiving surface (hereinafter referred to as the virtual planar plane) 22b is provided with respect to the head receiving surface 22a such that the virtual planar plane 22b forms an angle B with the longitudinal direction of the vehicle 1.

The virtual planar plane is defined as a planar plane connecting a contact point 9a and a contact point 9b together on the head receiving surface 22a as viewed from above, wherein the contact point 9a is a point at which the head 3a comes into contact with the airbag 20 in the case of a frontal collision, and the contact point 9b is a point at which a portion of the head 3a closest to the outside comes into contact with the airbag 20 in the case of an oblique collision.

Note that each of the contact "points" 9a and 9b is actually a vertical line.

The contact point (line) 9a is a contact point (line) in the case where the head 3a comes into contact evenly with the outer deployable portion 21 and the center deployable portion 22.

When the head 3a comes into contact with the head receiving surface 22a at the time of an oblique collision, the contact point (line) 9a corresponds to the point, of a region with which the head 3a comes into contact, that is most adjacent to the outside. The contact point (line) 9b corresponds to the point, of the region with which the head 3a comes into contact, that is the most adjacent to the center.

In other words, the contact points (lines) 9a and 9b correspond to both ends of the region, of the head receiving surface 22a, with which the head 3a can be in contact due to an oblique collision of the vehicle 1 with an obstacle. A plane obtained by approximating the contact region, of the head receiving surface 22a, with which the head 3a is in contact by a planer plane corresponds to the virtual receiving surface 22b connecting the contact points (lines) 9a and 9b together.

The angle A is formed between the longitudinal direction and the approach direction in which the head 3a moves, as viewed from above. The angle B is formed between the virtual receiving surface 22b and the longitudinal direction, as viewed from above.

Further, an angle C is formed between the virtual receiving surface 22b and the approach direction of the head 3a, as viewed from above.

As clearly seen from FIG. 4, the sum of the angles A and B is equal to the angle C.

As shown in FIGS. 5 and 8A, the head 3a that has moved obliquely forward due to the oblique collision comes into contact with the head receiving surface 22a of the center deployable portion 22.

The principle by which the head 3a is substantially kept from being turned in this situation will be described further in detail with reference to FIG. 5.

As shown in FIG. 5, the head 3a that has come into contact with the head receiving surface 22a receives a reaction force from the head receiving surface 22a. This reaction force is approximated with a reaction force F from the virtual receiving surface 22b. The reaction force F is divided into a component F1 acting in a direction parallel to the virtual receiving surface 22b and a component F2 acting in a direction perpendicular to the virtual receiving surface 22b.

Since the head 3a is in an ellipsoidal shape, the line of action of the reaction force component F2 passes outside the center of gravity of the head 3a. Rotation moment M1 resulting from the reaction force component F1 acts on the head 3a in the counterclockwise direction, whereas rotation moment M2 resulting from the reaction force component F2 acts on the head 3a in the clockwise direction.

At this time, as shown in FIG. 5, while the reaction force component F2 is greater than the reaction force component F1, an arm length L2 associated with the reaction force component F2 is shorter than an arm length L1 associated with the reaction force component F1.

Consequently, the rotation moments M1 and M2 act on the head 3a so as to cancel each other.

Note that for the sake of simplification of FIG. 5, the points from which the reaction force F, the components F1, F2, and the arm lengths L1, L2 act are shown in displaced manner, and therefore, each of their start and final points shown in FIG. 5 does not directly indicate a point where a force is applied or a point of application.

The reaction force F generally depends on the angle and the speed at which the head 3a moves toward the airbag 20, the deployed state of the airbag 20, and the angle of the virtual receiving surface 22b. Therefore, setting, in advance, a pressure at which the airbag is deployed, the angel of the virtual receiving surface 22b, the size of the center deployable portion 22, and the like in consideration of the angle and the speed at which the head 3a moves makes it possible to reduce the rotation moments on the head 3a and to reduce turning of the head 3a.

Note that the reaction force component F1 practically corresponds to a frictional force which the head 3a receives from the head receiving surface 22a. Since the reaction force component F1 is a component acting toward the center on the head receiving surface 22a, the head 3a itself is apt to move toward the outside of the head receiving surface 22a.

Since the head 3a is apt to move toward the outside of the head receiving surface 22a, the patch cloth 30 is deformed such that a portion which is closer to the outside than the contact point with head 3a is becomes slack, as shown in FIG. 8A.

As shown in FIG. 4, even if no patch cloth 30 is provided on the surface of the airbag 20, it is possible to substantially keep the head 3a from being turned in an initial stage of the collision by suitably determining the angle of the head receiving surface 22a. The principle by which this is achieved is similar to that described with reference to FIG. 5.

In a preferred embodiment, the angle A is 15° or lager and 28° or smaller, the angle B is 50° or larger and 62° or smaller, and the angle C is 78° or larger and 90° or smaller.

The angle A corresponds to the range of the oblique collision test described above. In this case, the angle C is preferably 90° or smaller because the point of application of the reaction force component F2 received by the head 3a is located adjacent to the outside as viewed from the center of the head 3a, and in order that a portion of the patch cloth 30 that is closer to the outside than the contact point of the head 3a is becomes slack, as described earlier. Analysis by the present inventors shows that setting the angle C within the range described above makes it possible to reduce an angular velocity of rotation of the head 3a to a low level. Further, the above-described range of the angle B is determined from the relationship between the angles A, B, and C.

While the head 3a is in contact with the airbag, the state in which the rotation moment M1 and the rotation moment M2 cancel each other is maintained, as described in the principle by which the head 3a is turned.

On the other hand, the body 3b shown in FIG. 3 is also apt to move obliquely forward at the time of a collision. While being fastened with a seat belt (not shown), the body 3b receives an inertial force due to the collision. Since the body 3b is greater in mass than the head 3a, the inertial force received by the body 3b draws the head 3a.

Further, the airbag device 10 needs to protect the occupant 3 against both a frontal collision and an oblique collision. To address the frontal collision, it is necessary to provide a sufficiently high pressure for deploying the airbag 20.

However, such a high pressure results in that the head 3a receives a reaction force from the airbag 20, and the head 3a is apt to roll over the surface of the airbag 20 at the time of an oblique collision.

As a result, as shown in FIGS. 6, 7, and 8B, the head 3a starts to move toward the center along the head receiving surface 22a, while receiving the reaction force from the center deployable portion 22.

As shown in FIG. 6, in the case where no patch cloth 30 is provided, the head 3a, which is moving as described above, receives a frictional force F3 which acts from the head receiving surface 22a toward the outside.

Rotation moment M3 which depends on the product of the frictional force F3 and a distance between the center of gravity of the head 3a and the contact point of the head 3a acts on the head 3a in the clockwise direction.

In this situation, the head 3a is tuned in clockwise direction, and the head 3a may be damaged.

In contrast, in the case where the patch cloth 30 is provided on the head receiving surface 22a, as shown in FIGS. 7 and 8A to 8C, the head 3a starts to move toward the center, while substantially being in contact with the patch cloth 30.

At this moment, a coefficient of kinetic friction between the head 3a and the patch cloth 30 is greater than that between the back surface of the patch cloth 30 and the head receiving surface 22a. Therefore, the patch cloth 30a starts to move relative to the head receiving surface 22 while the head 3a substantially stays on the surface of the patch cloth 30.

Further, the patch cloth 30, which is coupled to the head receiving surface 22a while having a slack portion with respect to the vehicle width direction, can move relative to and on the head receiving surface 22a while receiving a low frictional force.

Specifically, as shown in FIG. 8B, immediately after the head 3a comes into contact with the patch cloth 30, the patch cloth 30 moves on the head receiving surface 22a so that its slack portion adjacent to the outside is pulled and extended toward the center.

Eventually, the head 3a comes out of contact with the surface of the airbag 20 as shown in FIG. 8C. However, the rotation moment on the head 3a is reduced to a low level, and the occupant 3 is substantially prevented from being damaged.

As shown in FIG. 8C, the slack portion of the patch cloth 30 moves toward the center, and the head 3a comes out of contact with the surface of the airbag 20 in this state. Making the patch cloth 30 have a length, in the vehicle width direction, long enough to prevent the slack portion from being extended until the head 3a comes out of contact substantially prevents excessive rotation moment from being applied to the head 3a and enables protection of the occupant 3.

As described above, provision of the patch cloth 30 on the center deployable portion 22 of the airbag 20 can significantly reduce the frictional force F3 received by the head 3a itself, compared to the case where the patch cloth 30 is absent. This is because even though a frictional force based on the coefficient of friction between the back surface of the patch cloth 30 and the head receiving surface 22a is practically applied to the head 3a, this fictional force is smaller than the frictional force based on the coefficient of friction between the head 3a and the patch cloth 30.

In short, the patch cloth 30 functions as a frictional force reducer that practically reduces the frictional force between the head 3a and the head receiving surface 22a.

As can be appreciated from the foregoing description, if the patch cloth 30 has no slack portion, the patch cloth 30 will not be able to move relative to, and on, the head receiving surface 22a in the vehicle width direction and will not function to practically reduce the frictional force between the head 3a and the head receiving surface 22a.

Here, a strength needed for both ends 30a and 30b of the patch cloth 30 will be described.

As described earlier, both ends 30a and 30b need to be strong to the extent that the coupling is not ruptured when the head 3a moves along the head receiving surface 22a.

As shown in FIG. 9A, if the coupling between the center-facing end 30a and the head receiving surface 22a is ruptured due to the movement of the head 3a in an initial stage of the collision, the center-facing end 30a will be able to move freely.

In this case, however, the patch cloth 30 cannot necessarily maintain the portion that is slack with respect to the head receiving surface 22a. For example, in a situation where the center-facing end 30a has been drawn back toward the outside as shown in FIG. 9A, when the head 3a moves toward the center in the vehicle width direction, it becomes difficult for the patch cloth 30 to move on the head receiving surface 22a.

On the other hand, in a situation where the coupling between the outside-facing end 30b and the head receiving surface 22a is ruptured as shown in FIG. 9B, since the center-facing end 30a is kept coupled with respect the direction in which the head 3a moves, the head 3a is likely to move more smoothly toward the center in the vehicle width direction than the case shown in FIG. 9A.

However, in the case of an oblique collision, the head 3a actually receives not only forces in the vehicle width and longitudinal directions, but also a force in the vertical direction. Thus, the head 3a is apt to move not only in the vehicle width direction along the head receiving surface 22a, but also in the vertical direction.

Since the outside-facing end 30b can move freely, it becomes difficult to restrict the vertical movement of the head 3a, and rotation moment may be applied to the head 3a to move the head 3a in the longitudinal direction. In this case, the head and/or the neck of the occupant may be damaged. Also in the case shown in FIG. 9A, the same situation may occur because the center-facing end 30a can move freely.

In contrast, for the airbag of this embodiment, as shown in FIGS. 8B and 8C, both ends 30a and 30b of the patch cloth 30 are kept coupled and fixed to the head receiving surface 22a even when the head 3a comes into contact with head receiving surface 22a and moves toward the center. With respect to the head receiving surface 22a, the patch cloth 30 can move easily in the vehicle width direction relative to which its portion is slack, but its movement is restricted in the vertical direction. Thus, the patch cloth 30 cannot move freely in the directions except the vehicle width direction.

Thus, rotation moment acting to turn the head 3a in the longitudinal direction is substantially kept from being applied to the head 3a, enabling protection of the occupant.

As described above, this embodiment, in which the airbag includes the center deployable portion and the orientation of the head receiving surface that faces an occupant is adjusted with respect to the approach direction in which the occupant's head moves, can reduce the rotation moment that is applied to the occupant's head in an initial stage of an oblique collision. Further, the patch cloth provided on the head receiving surface such that the patch cloth has a portion that is slack with respect to the vehicle width direction. Therefore, in a later stage of an oblique collision, the patch cloth moves on and relative to the head receiving surface, allowing the head to move toward the center. This feature practically reduces a frictional force generated between the head and the airbag, enabling reduction in the rotation moment applied to the head.

### (Second Embodiment)

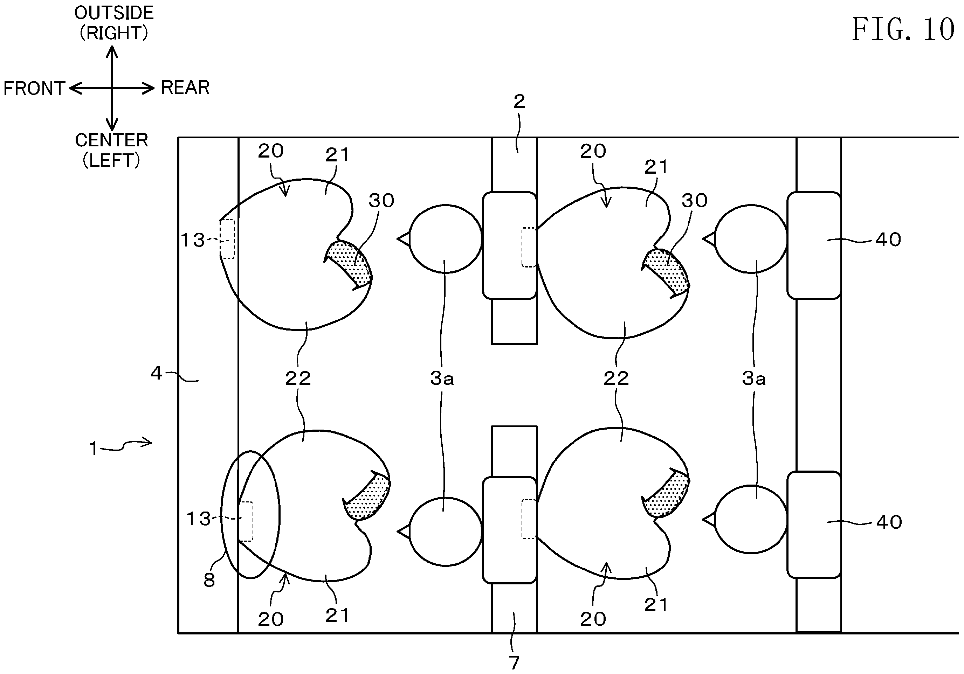

FIG. 10 is a plan view of a vehicle cabin where airbags of this embodiment have been deployed, as viewed from above. This embodiment will be described on the basis of a four-seater vehicle 1, which is a non-limiting example.

Although the first embodiment has been described based on the example in which the airbag device 10 is provided for the passenger seat 2, the airbag devices 10 described in the first embodiment may be provided also to protect occupants seated in a driver's seat 7 and rear seats 40.

For the occupant seated in the driver's seat 7, an airbag 20 is installed in a central portion of a steering wheel 8, and configured to be expanded and deployed at the time of a collision of the vehicle 1.

For the occupant seated in the passenger seat 2, an airbag 20 is installed in an instrument panel 4, and configured to be expanded and deployed at the time of a collision of the vehicle 1.

For the occupants seated in the rear seats 40, airbags 20 are each installed in a rear portion of the passenger seat 2 and a rear portion of the driver's seat 7, and configured to be expanded and deployed at the time of a collision of the vehicle 1.

Each of the airbags 20 includes a center deployable portion 22 arranged adjacent to the center in the vehicle width direction, and an outer deployable portion 21 arranged adjacent to the outside in the vehicle width direction, i.e., to an associated door.

Similarly to the first embodiment, each of the center deployable portions 22 of the airbags 20 has a patch cloth 30 coupled to a surface thereof, and is configured such that a head receiving surface 22a is oriented obliquely rearward toward the center, with a virtual receiving surface 22b formed as shown in FIG. 5.

Note that side airbags 6 and a curtain airbag are omitted from FIG. 10. Other components and elements which are not directly related to the arrangement or the like of the airbags are omitted or shown in a simplified manner.

This embodiment makes it possible to substantially keep the heads of the occupants in the vehicle from being turned, and to reliably protect the bodies of the occupants at the time of an oblique collision of the vehicle.

The airbag device 10 may be provided for all of the occupants or some of the occupants.

A common ECU 12 and a common inflator 13 may be used to expand and deploy these airbags. Alternatively, an ECU 12 and an inflator 13 may be used for each airbag. Further, only an inflator 13 may be separately provided for each seat, or an inflator 13 dedicated to the rear seat may be provided separately.

Further, an impact sensor 11 dedicated to the rear seat may be provided separately.

The position of the inflator 13 is not limited to those disclosed in the first and second embodiments.

It is suitable that the airbag 20 has a size needed for protection of the occupant 3. The size ratio between the head 3a and the airbag 20, and the size ratio between the outer deployable portion 21 and the center deployable portion 22 are not limited to those shown in the drawings associated with the first and second embodiments.

It is suitable that the patch cloth 30 has a length in the vertical direction which is long enough to allow the patch cloth 30 and the head 3a to be in contact with each other when the head 3a comes into contact with the head receiving surface 22a.

### INDUSTRIAL APPLICABILITY

The airbag device of the present invention makes it possible to substantially keep the head of an occupant from being turned and to reliably protect the occupant at the time of an oblique collision of a vehicle. Thus, the airbag of the present invention is very useful as a protection device for an occupant in a vehicle.

### DESCRIPTION OF REFERENCE CHARACTERS

- 1: Vehicle
- 2: Passenger Seat
- 3: Occupant
- 3a: Head
- 4: Instrument Panel
- 5: Door
- 6: Side Airbag
- 7: Driver's Seat
- 8: Steering Wheel
- 10: Airbag Device
- 11: Impact Sensor
- 12: ECU
- 13: Inflator
- 20: Airbag (Bag Member)
- 21: Outer Deployable Portion
- 22: Center Deployable Portion
- 22a: Head Receiving Surface
- 22b: Virtual Planar Plane
- 30: Patch Cloth (Frictional Force Reducer)
- 30a: Center-Facing End
- 30b: Outside-Facing End
- 40: Rear Seat

## Claims

1. An airbag device (10) comprising a bag member (20) configured to be deployed from a location in front of an occupant toward the occupant when receiving gas suppled to the bag member (20), wherein
the bag member (20) includes a center deployable portion (22) configured to be deployed obliquely rearward toward a center in a vehicle width direction of a vehicle when receiving the gas supplied,
the center deployable portion (22) has a head receiving surface (22a) which receives the head of the occupant at time of an oblique collision of the vehicle (1) with an obstacle, and
the head receiving surface (22a) has thereon a frictional force reducer (30) which reduces a friction force between the bag member (20) and the head, **characterized in that**:
the frictional force reducer (30) has both ends, in the vehicle width direction, coupled to the head receiving surface (22a), while having a slack portion which is slack with respect to the vehicle width direction.

2. The airbag device of claim 1, wherein
if a contact region of the head on the head receiving surface (22a) is approximated with a planar plane, an angle between the planar plane and an approach direction in which the head moves is 90° or smaller, as viewed from above the vehicle (1).

3. The airbag device of claim 2, wherein
the angle is 78° or larger and 90° or smaller, as viewed from above the vehicle (1).

4. Vehicle (1) comprising the airbag device of any one of claims 1 to 3, wherein
the bag member (20) is arranged in a predetermined portion of at least one of a driver's seat, a passenger seat, or a rear seat of the vehicle (1), and the center deployable portion (22) is located adjacent to the center as viewed in the vehicle width direction.

## Patentansprüche

1. Airbagvorrichtung (10), aufweisend ein Beutelelement (20), das eingerichtet ist, bei Aufnahme von an das Beutelelement (20) zugeführtem Gas von einer Position vor einem Insassen hin zu dem Insassen entfaltet zu werden, wobei
das Beutelelement (20) einen mittleren entfaltbaren Abschnitt (22) aufweist, der eingerichtet ist, bei Aufnahme des Gases schräg nach hinten hin zu einer Mitte in einer Fahrzeugbreitenrichtung eines Fahrzeugs entfaltet zu werden,
der mittlere entfaltbare Abschnitt (22) eine Kopf-Aufnahmeoberfläche (22a) aufweist, die den Kopf des Insassen zum Zeitpunkt eines schrägen Aufpralls des Fahrzeugs (1) mit einem Hindernis aufnimmt, und
die Kopf-Aufnahmeoberfläche (22a) an sich eine Reibkraftverringerungseinrichtung (30) aufweist, die eine Reibkraft zwischen dem Beutelelement (20) und dem Kopf verringert, **dadurch gekennzeichnet, dass**:
die Reibkraftverringerungseinrichtung (30) in der Fahrzeugbreitenrichtung mit beiden Enden an die Kopf-Aufnahmeoberfläche (22a) gekoppelt ist und gleichzeitig einen schlaffen Abschnitt aufweist, der bezüglich der Fahrzeugbreitenrichtung schlaff ist.

2. Airbagvorrichtung nach Anspruch 1, wobei
falls ein Kontaktbereich des Kopfes an der Kopfaufnahmeoberfläche (22a) mit einer planaren Ebene approximiert wird, ein Winkel zwischen der planaren Ebene und einer Annäherungsrichtung, in welcher sich der Kopf bewegt, in einer Draufsicht des Fahrzeugs (1) von oben 90° oder kleiner ist.

3. Airbagvorrichtung Nach Anspruch 2, wobei
in einer Draufsicht des Fahrzeugs (1) von oben, der Winkel 78° oder größer und 90° oder kleiner ist.

4. Fahrzeug (1), aufweisend die Airbagvorrichtung nach einem der Ansprüche 1 bis 3, wobei
das Beutelelement (20) in einem vorgegebenen Abschnitt eines Fahrersitzes und/oder Beifahrersitzes und/oder eines Rücksitzes des Fahrzeugs (1) angeordnet ist, und sich der mittlere entfaltbare Abschnitt (22), in Fahrzeugbreitenrichtung betrachtet, angrenzend an die Mitte befindet.

## Revendications

1. Dispositif de coussin de sécurité gonflable (10) comprenant un élément de coussin (20) configuré pour être déployé à partir d'un emplacement devant un occupant en direction de l'occupant lors de la réception d'un gaz fourni à l'élément de coussin (20), dans lequel
l'élément de coussin (20) inclut une partie déployable centrale (22) configurée pour être déployée obliquement vers l'arrière en direction d'un centre dans une direction de la largeur d'un véhicule lors de la réception du gaz fourni,
la partie déployable centrale (22) a une surface de réception de tête (22a) qui reçoit la tête d'un occupant au moment d'une collision oblique du véhicule (1) avec un obstacle, et
la surface de réception de tête (22a) a sur celle-ci un réducteur de force de friction (30) qui réduit une force de friction entre l'élément de coussin (20) et la tête, **caractérisé en ce que** :
le réducteur de force de friction (30) a deux extrémités, dans la direction de la largeur du véhicule, accouplées à la surface de réception de tête (22a) tout en ayant une partie lâche qui est lâche par rapport à la direction de la largeur du véhicule.

2. Dispositif de coussin de sécurité gonflable selon la revendication 1, dans lequel si une région de contact de la tête sur la surface de réception de tête (22a) est approchée par un plan, un angle entre le plan et une direction d'approche dans laquelle la tête se déplace est de 90° ou moins, vu depuis le dessus du véhicule (1).

3. Dispositif de coussin de sécurité gonflable selon la revendication 2, dans lequel l'angle est de 78° ou plus et de 90° ou moins, vu depuis le dessus du véhicule (1).

4. Véhicule (1) comprenant le dispositif de coussin de sécurité gonflable selon l'une quelconque des revendications 1 à 3, dans lequel l'élément de coussin (20) est agencé dans une partie prédéterminée d'au moins l'un d'un siège conducteur, d'un siège passager, ou d'un siège arrière du véhicule (1), et la partie déployable centrale (22) est située adjacente au centre vu dans la direction de la largeur du véhicule.
